## Europäisches Patentamt
## European Patent Office
## Office européen des brevets

(11) Numéro de publication: **0 175 600**
**B1**

# FASCICULE DE BREVET EUROPÉEN

(45) Date de publication du fascicule du brevet:
**24.02.88**

(21) Numéro de dépôt: **85401531.0**

(22) Date de dépôt: **24.07.85**

(51) Int. Cl.⁴: **F 16 D 65/56**

(54) **Frein à disque à réglage automatique.**

(30) Priorité: **05.09.84 FR 8413658**
**31.10.84 FR 8416643**

(43) Date de publication de la demande:
**26.03.86 Bulletin 86/13**

(45) Mention de la délivrance du brevet:
**24.02.88 Bulletin 88/8**

(84) Etats contractants désignés:
**DE GB IT**

(56) Documents cité:
**EP-A-0 113 261**
**DE-A-1 480 270**
**DE-A-1 750 056**
**DE-A-2 543 930**
**FR-A-1 487 560**
**FR-A-2 277 275**
**FR-A-2 321 074**
**FR-A-2 504 224**
**GB-A-1 381 282**
**GB-A-2 004 007**
**GB-A-2 063 399**
**GB-A-2 063 401**
**GB-A-2 080 894**

(73) Titulaire: **BENDIX France, 126, rue de Stalingrad, F-93700 Drancy (FR)**

(72) Inventeur: **Le Marchand, Claude, 8, Allée des Tilleuls, F-95339 Domont (FR)**
Inventeur: **Gerard, Jean-Louis, 129, Boulevard Massena, F-75013 Paris (FR)**

(74) Mandataire: **Le Moenner, Gabriel, Division Technique Service Brevets Bendix Europe 126, rue de Stalingrad, F-93700 Drancy (FR)**

## Description

L'invention se rapporte à un frein à disque à réglage automatique pour véhicule automobile.

L'invention concerne plus particulièrement un frein à disque du type à étrier coulissant comprenant un moteur de frein susceptible d'être actionné indépendamment soit par une pression de fluide soit par une commande mécanique. L'actionnement du moteur de frein sollicite directement un premier élément de friction en engagement de friction avec une première face d'un disque tournant et par réaction au travers de l'étrier coulissant un second élément de friction en engagement de friction avec une deuxième face du disque, opposée à la première face. L'étrier coulisse par rapport à un support fixe qui reçoit directement ou indirectement le couple engendré par les éléments de friction. Dans les freins de ce type, compte tenu de l'épaisseur initiale des éléments de friction, il est nécessaire d'avoir un dispositif de réglage automatique placé sur la commande mécanique de manière à ce que la course de cette commande n'évolue pas en fonction de l'usure des éléments de friction. De nombreuses solutions ont été proposées pour résoudre ce problème. Néanmoins, ces systèmes présentent généralement l'inconvénient d'assurer un réglage quelle que soit la cause qui ait provoqué l'actionnement de ce réglage automatique, Ce type de dispositif se met en oeuvre aussi bien pour compenser l'usure des éléments de friction, ce qui est normal, que pour compenser les déformations élastiques de l'étrier pour des pressions élevées de commande hydraulique. Ce type de dispositif impose d'avoir une course morte ne faisant pas intervenir le réglage automatique, relativement importante et de l'ordre de la déformation constatée sur l'étrier lors de son actionnement.

Afin de résoudre ce problème, la demanderesse a proposé dans la demande de brevet français 82-21683 publiée sous le numéro 2 538 486 = EP-A-0 113 261 un frein à disque de ce type dans lequel le réglage automatique est neutralisé lorsque la pression de commande atteint une valeur prédéterminée au moyen d'un piston de contrôle qui bloque la rotation de l'écrou au travers d'une douille solidaire en rotation avec l'écrou, le piston de contrôle étant annulaire et situé entre le corps du moteur de frein et une portion cylindrique de la vis.

Cette solution donne des résultats parfaitement satisfaisants avec néanmoins l'inconvénient que le frein doit être conçu initialement pour recevoir ce dispositif et la valeur de la pression prédéterminée étant définie par l'alésage du corps du moteur de frein prévu pour recevoir le piston annulaire de contrôle n'est plus modifiable après usinage.

L'invention a pour but de proposer un frein à disque du type décrit ci-dessus dans lequel ces inconvénients sont éliminés tout en présentant les avantages de celui-ci. Dans ce but l'invention propose un frein à disque à réglage automatique du type comportant un étrier coulissant, un moteur de frein agissant directement sur un premier élément de friction et par réaction au travers de l'étrier sur un deuxième élément de friction, ledit moteur de frein comportant une commande mécanique agissant sur un piston de commande hydraulique au travers d'un dispositif de réglage automatique, ledit dispositif de réglage étant formé par un système vis écrou à pas réversible susceptible d'être actionné par le piston hydraulique au delà d'une course prédéterminée de ce dernier, ledit dispositif de réglage comportant une douille solidaire en rotation dudit écrou et coopérant avec un piston de contrôle immobilisant ladite douille en rotation et en translation lorsque la pression hydraulique agissant sur le piston de commande hydraulique atteint une valeur prédéterminée caractérisé en ce que ledit piston hydraulique et ledit piston de contrôle sont montés coaxialement l'un dans l'autre et coopèrent à coulissement réciproque étanche.

On comprend que grâce à une telle structure le piston de contrôle étant logé dans le piston hydraulique ou inversement, le moteur de frein et plus particulièrement le corps n'est pas modifié pour recevoir le piston de contrôle et par conséquent il est aisé de modifier la valeur de la pression prédéterminée par remplacement du piston hydraulique. On comprend que grâce à cette structure des freins comportant un réglage automatique classique à système vis écrou à pas réversible peuvent recevoir un piston hydraulique comportant un piston de contrôle sans aucune modification du frein ce qui permet de faire bénéficier les freins existants d'un dispositif évitant le surréglage et introduisant une réduction de course morte considérable.

D'autres caractéristiques et avantages du frein à disque, objet de la présente invention, apparaîtront à la lecture de la description du frein en se référant aux dessins annexés dans lesquels:

- la Figure 1 est une vue en coupe d'un étrier de frein réalisé conformément aux enseignements de la présente invention;
- la Figure 2 est une vue partielle en coupe d'une variante de la Figure 1; et
- la Figure 3 est une vue similaire à la Figure 1 pour un deuxième mode de réalisation.

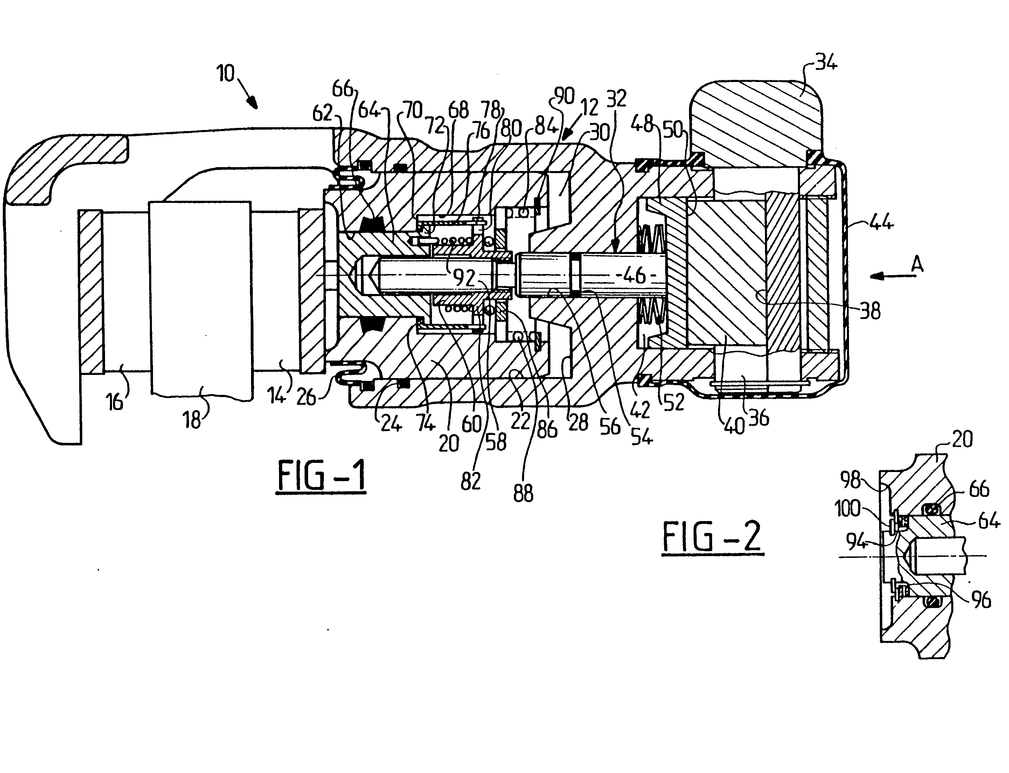

Le frein à disque représenté sur la Figure 1 comprend un étrier coulissant désigné dans son ensemble par la référence 10 monté sur un organe ou support fixe (non représenté) susceptible d'être fixé sur une partie fixe du véhicule (non représentée). L'étrier 10 comporte un moteur de frein désigné dans son ensemble par la référence 12 susceptible d'agir directement sur un premier élément de friction 14 et indirectement au travers de l'étrier coulissant sur un deuxième élément de friction 16 pour solliciter ceux-ci en engagement de friction avec un disque tournant 18. Le moteur de frein 12 comporte une commande hydraulique et une commande mécanique comme on le verra plus précisément.

D'une façon conventionnelle, la commande hydraulique est assurée par un piston de commande hydraulique 20 monté coulissant dans un alésage 22 formé dans le moteur de frein 12. L'étanchéité entre le piston 20 et l'alésage 22 est assurée par un joint 24, le piston étant par ailleurs protégé par un capuchon de piston 26. Le piston 20 et une paroi 28 de fond de l'alésage 22 définissent une chambre 30 susceptible d'être reliée à une source de pression (non représentée) comme par exemple le maître cylindre du véhicule.

La commande mécanique, désignée dans son ensemble par la référence 32, est assurée au moyen d'un levier 34 susceptible d'être reliée à un câble ou analogue (non représenté) solidaire d'un axe 36 dans lequel est formée une rainure 38 recevant une biellette 40. L'axe 36 est reçu dans deux alésages formés dans le moteur de frein et immobilisé longitudinalement par rapport au moteur au moyen d'un épaulement formé sur le levier 34 d'une part et d'autre part au moyen d'un circlips ou analogue. L'axe 36 et la biellette 40 sont logés dans un alésage borgne 42 formé dans le moteur de frein, la partie ouverte de l'alésage est pourvue d'un obturateur et l'ensemble est protégé par un capuchon flexible 44. L'alésage 42 reçoit également une vis 46 dont une portion épanouie 48 comporte une rainure 50 qui coopère avec la biellette 40. Entre le fond de l'alésage borgne 42 et la portion épanouie 48 est placé un ressort de rappel 52. La vis 46 comporte une portion cylindrique dans laquelle est formée une gorge comportant un joint 54. Ce joint 54 et la partie cylindrique de la vis 46 sont susceptibles de coulisser par rapport à un alésage 56 formé dans le corps du moteur de frein. La vis 46 se prolonge dans la chambre 30 par une portion filetée 58 à pas réversible sur laquelle est monté un écrou 60. Le piston de commande hydraulique 20 comporte un alésage 62 dans lequel est monté un piston de contrôle 64 reçu à coulissement étanche dans cet alésage 62 au moyen d'un joint d'étanchéité 66. Le piston hydraulique 20 comporte un deuxième alésage 68 d'un diamètre supérieur au diamètre de l'alésage 62, le passage d'un diamètre à l'autre formant une paroi 70 dirigée vers la chambre 30. Entre cette paroi 70 et une collerette 72 formée sur l'extrémité du piston de contrôle 64, est placée une collerette 74 formée sur un élément annulaire 76 formant une douille coaxiale au piston de contrôle 64. L'extrémité de la douille 76 du côté de la chambre 30 forme une pluralité de languettes 78 qui pénètre dans des rainures 80 formées sur une collerette 82 portée par l'écrou 60. La coopération de ces languettes 78 et de ces rainures 80 solidarise en rotation la douille 76 et l'écrou 60 tout en autorisant un déplacement relatif axial entre ces deux pièces. Un troisième alésage 84 d'un diamètre supérieur à l'alésage 68 reçoit en coulissement une pièce annulaire 86 maintenue en appui sur le décrochement formé par les deux alésages 68 et 84 au moyen d'un ressort 88 qui prend appui sur un circlips ou analogue 90 solidaire du piston 20 à proximité de la chambre 30. Entre la pièce annulaire 86 et la collerette 82 est placée une butée à billes, la pièce annulaire 86 et la collerette 82 formant chemins de roulement. Entre le piston de contrôle 64 et l'écrou 60 est placé un embrayage unidirectionnel 92 formé dans le mode de réalisation représenté par un ressort d'embrayage monté sur une portion cylindrique de l'écrou 60 et dont une extrémité pénètre dans un perçage formé sur le piston de contrôle 64.

Le frein qui vient d'être décrit à l'aide de la Figure 1 fonctionne de la manière suivante:

Au repos, les différents éléments du frein occupent les positions représentées. Lorsque le frein est actionné au moyen de la commande mécanique, le levier 34 et l'axe 36 sollicitent la biellette 40 dans une direction générale représentée par la flèche A. La biellette 40 au travers de la rainure 50 pousse la portion épanouie 48 de la vis 46 à l'encontre du ressort 52. Comme la portion cylindrique de la vis peut coulisser par rapport à l'alésage 56 formé dans le moteur de frein, la vis 46 se déplace également dans le sens de la flèche A. Ce mouvement de la vis 46 au moyen de la portion filetée 58 est transmise à l'écrou 60, la rotation de celui-ci étant empêchée par l'embrayage unidirectionnel 92, l'écrou 60 vient en appui sur le piston de contrôle 64 qui par sa collerette 72 au travers de la collerette 74 de la douille 76 sollicite le piston hydraulique 20 au travers de la paroi 70. L'effort de la biellette 40 est donc transmis à l'élément de friction 14 et par réaction de cet élément de friction 14 sur le disque 18 apparaît une contre réaction sur l'axe 36 qui entraîne en coulissement l'étrier 10 dans le sens contraire à celui défini par la flèche A ce qui amène l'élément de friction 16 en contact du disque 18. Au relâchement de la commande manuelle les différents éléments du frein reprennent les positions représentées.

Lorsque le frein est actionné au moyen de la commande hydraulique, une pression hydraulique est appliquée dans la chambre 30 de manière à solliciter le piston 20 vers la gauche en se référant à la figure 1. Si le mouvement du piston 20 par rapport à l'écrou 60 ne dépasse pas le jeu fonctionnel défini entre la butée à billes, la pièce annulaire 86 et la collerette 82, le mouvement du piston 20 n'a aucun effet sur le réglage automatique. Si le mouvement du piston 20 est supérieur au jeu fonctionnel prédéterminé l'écrou 60 est entraîné vers la gauche par le piston 20 au travers de la butée à billes de la pièce annulaire 86 et du ressort 88, lui-même entraîné par le circlips 90 solidaire du piston. La vis 46 étant immobilisée axialement au moyen du ressort 52, l'écrou 60 grâce au pas réversible tourne par rapport à la vis 46 pour pouvoir suivre le mouvement du piston 20, l'embrayage unidirectionnel 92 autorisant cette rotation. Dans cette phase de fonctionnement, la douille 76 est libre de tourner avec l'écrou 60, le piston de contrôle 64 n'appliquant pas comme on le verra plus tard la collerette 74 de la douille 76 sur la paroi 70. Si la pression hydraulique est alors relâchée, le joint 24 de façon conventionnelle fait légèrement revenir le piston 20, l'embrayage unidirectionnel 92 interdisant la rotation de l'écrou 60. Comme à l'application du freinage, l'écrou à tourné en se déplaçant vers la gauche, le dispositif de réglage automatique se trouve donc maintenant dans une nouvelle position décalée vers la gauche et interdit au piston de prendre sa position initiale.

Si, par contre, le relâchement du freinage n'intervient pas immédiatement, la pression dans la chambre 30 continue à monter et sous l'effet de cette pression et de l'effort engendré par le piston 20 l'étrier se déforme. Il est donc nécessaire de bloquer le fonctionnement du réglage avant le début de la déformation mécanique de l'étrier.

Lorsque la pression dans la chambre 30 atteint le niveau défini par la section du piston de contrôle 64 et de la résistance au mouvement de ce piston engendré par le joint 66, le piston de contrôle 64 se déplace sous l'effet de cette pression vers la gauche et pince au moyen de sa collerette 72 la collerette 74 de la douille 76 contre la paroi 70 du piston 20. La douille 76 étant alors immobilisée en rotation et axialement par le piston de contrôle 64, toute rotation de l'écrou 60 devient impossible du fait des languettes 78 et des rainures 80. L'écrou 60 par l'intermédiaire de la butée à billes et de la pièce annulaire 86 comprime le ressort 88. Le piston 20 se déplace vers la gauche sous l'effet de la pression régnant dans la chambre 30 engendrant des déformations dans l'étrier du fait des efforts mis en jeu sans mettre en oeuvre le réglage automatique, l'effort de pincement engendré par le piston de contrôle et plus précisément par sa collerette 72 sur la collerette 74 de la douille 76 étant supérieur à l'effort du ressort 88. Au relâchement de la pression hydraulique, dans un premier temps, le ressort 88 se détend et amène la pièce annulaire 86 en appui sur l'épaulement situé entre les alésages 84 et 68, l'écrou 60 n'est alors plus soumis à un effort axial transmis par la butée à billes mais reste sans jeu fonctionnel. Dans un deuxième temps, le joint 24 ramène le piston 20 vers la droite de la figure 1 d'une façon conventionnelle et le jeu fontionnel apparaît maintenant entre l'écrou 60 et la butée à billes. Dans un troisième temps, la pression continuant à décroître, le joint 66 de même que le joint 24 précédemment repousse le piston de contrôle 64 vers la droite libérant ainsi la collerette 74 de la douille 76 qui est de nouveau libre de tourner avec l'écrou 60 si celui-ci est sollicité en rotation.

La figure 2 représente une variante de la figure 1 dans laquelle seule l'extrémité du piston de commande hydraulique 20 a été représenté. Sur cette variante, un ressort 94 formé par une rondelle élastique a été placé entre un épaulement 96 formé sur le piston de contrôle 64 et un circlips 98 solidaire du piston 20. Un deuxième circlips 100 placé sur l'extrémité du piston de contrôle 64 limite les déplacements relatifs entre piston 20 et piston de contrôle 64 sous l'effet du ressort 94.

Le fonctionnement du frein est identique à celui décrit dans le cadre du premier mode de réalisation à la différence près que le ressort 94 complète l'effort du joint 66 pour assurer du déplacement vers la droite du piston 64 lorsque la pression dans la chambre 30 décroît. Il permet également de modifier facilement la pression prédéterminée pour laquelle le réglage automatique est empêché.

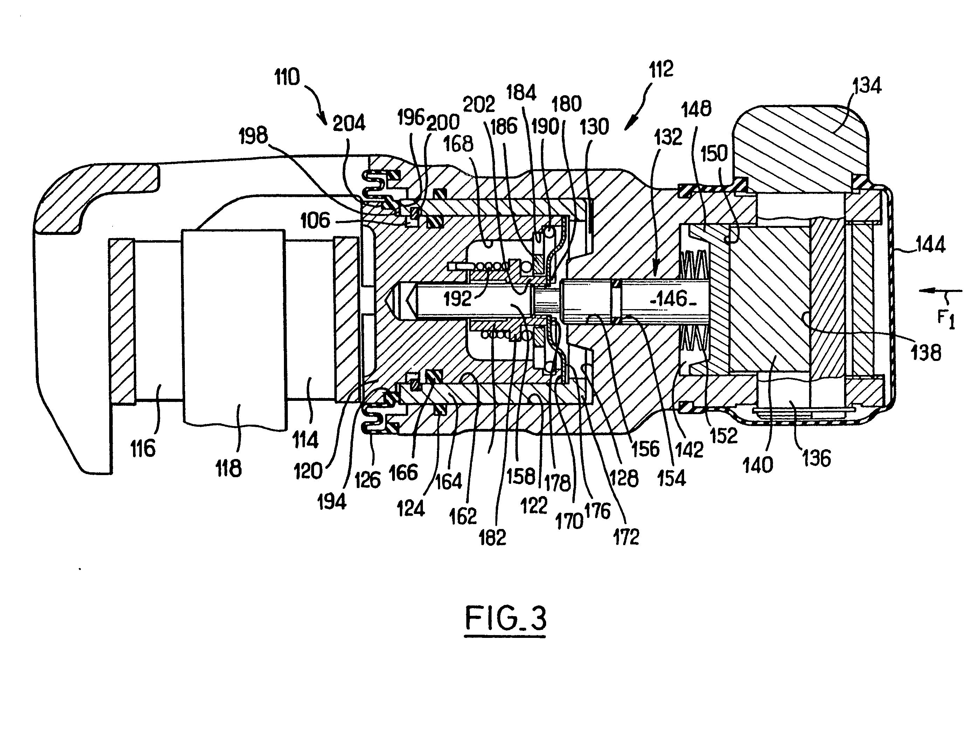

La figure 3 représente un second mode de réalisation. Le frein à disque représenté sur la Figure 3 comprend un étrier coulissant désigné dans son ensemble par la référence 110 monté sur un organe ou support fixe (non représenté) susceptible d'être fixé sur une partie fixe du véhicule (non représentée). L'étrier 110 comporte un moteur de frein désigné dans son ensemble par la référence 112 susceptible d'agir directement sur un premier élément de friction 114 et indirectement au travers de l'étrier coulissant sur un deuxième élément de friction 116 pour solliciter ceux-ci en engagement de friction avec un disque tournant 118. Le moteur de frein 112 comporte une commande hydraulique et une commande mécanique comme on le verra plus précisément.

La commande hydraulique est assurée par un piston de commande hydraulique 120 monté coulissant dans un alésage 162 formé dans un piston de contrôle 164, lui-même monté coulissant dans un alésage 122 formé dans le moteur de frein 112. L'étanchéité entre le piston 120 et l'alésage 162 est assurée par un joint 166 alors que l'étanchéité entre le piston de contrôle 164 et l'alésage 122 du corps 112 est assurée par un joint 124. Les pistons 120 et 164 sont par ailleurs protégés par un capuchon de piston 126. Les pistons 120 et 164 et une paroi 128 de fond de l'alésage 122 définissant une chambre 130 susceptible d'être reliée à une source de pression (non représentée) comme par exemple le maître cylindre du véhicule.

La commande mécanique, désignée dans son ensemble par la référence 132, est assurée au moyen d'un levier 134 susceptible d'être relié à un câble ou analogue (non représenté) solidaire d'un axe 136 dans lequel est formée une rainure 138 recevant une biellette 140. L'axe 136 est reçu dans deux alésages formés dans le moteur de frein et immobilisé longitudinalement par rapport au moteur au moyen d'un épaulement formé sur le levier 134 d'une part et d'autre part au moyen d'un circlips ou analogue. L'axe 136 et la biellette 140 sont montés dans un alésage borgne 142 formé dans le moteur de frein, la partie ouverte de l'alésage est pourvue d'un obturateur et l'ensemble est protégé par un capuchon flexible 144. L'alésage 142 reçoit également une vis 146 dont une portion épanouie 148 comporte une rainure 150 qui coopère avec la biellette 140. Entre le fond de l'alésage borgne 142 et la portion épanouie 148 est placé un ressort de rappel 152. La vis 146 comporte une portion cylindrique dans laquelle est formée une gorge comportant un joint 154. Ce joint 154 et la partie cylindrique de la vis 146 sont susceptibles de coulisser par rapport à un alésage 156 formé dans le corps du moteur de frein. La vis 146 se prolonge dans la chambre 130 par une portion filetée 158 à pas réversible sur laquelle est monté un écrou 160. Le piston de commande hydraulique 120 comporte un alésage 168 prolongé par un deuxième alésage 184 d'un diamètre supérieur à l'alésage 168, l'alésage 184 étant placé du côté de la chambre 130. Une pièce annulaire 186 est maintenue en appui sur le décrochement formé par les deux alésages 168 et 184 au moyen d'un jonc 190 placé dans une gorge formée dans l'alésage 184. Entre la pièce annulaire 186 et une collerette 182 formée sur l'écrou 160 est placée une butée à billes, la pièce annulaire 186 et la collerette 182 formant chemins de roulement. Entre le piston de commande hydraulique 120 et l'écrou 160 est placé un embrayage unidirectionnel 192 formé dans le mode de réalisation représenté par un ressort d'embrayage monté sur une portion cylindrique de l'écrou 160 et dont une extrémité pénètre dans un perçage formé sur le piston de commande 120. L'écrou 160 se prolonge en direction de la chambre 130 par un prolongement 202 qui passe au travers de la pièce annulaire 186. Ce prolongement comporte à son extrémité côté chambre 130 des languettes d'extrémité 180 qui reçoivent des languettes 178 formées sur un élément annulaire 176. Les languettes 178 et 180 sont susceptibles de coulisser axialement les unes par rapport aux autres mais solidarisent en rotation l'écrou 160 et l'élément annulaire 176. L'élément annulaire 176 se prolonge radialement vers l'extérieur sans atteindre l'alésage 162 du piston de contrôle 164 mais de manière à se trouver en vis à vis de la paroi d'extrémité 170 du piston 120 du côté de la chambre 130. Le piston de contrôle 164 présente à son extrémité côté chambre 130 une collerette 172 dirigée radialement vers l'intérieur de manière à enfermer l'élément annulaire 176 entre cette collerette 172 et la paroi 170 du piston 120. Un jeu axial est prévu entre la collerette 172 et l'élément annulaire 176 évitant le pincement de l'élément annulaire 176. A son extrémité opposée à la chambre 130, le piston de contrôle présente une surface frontale 196 placée en vis à vis d'une autre surface frontale 198 formée sur le piston hydraulique 120. La distance entre les surfaces frontales 196 et 198 étant supérieures au jeu entre la collerette 172 et l'élément annulaire 176. Le piston 120 comporte un épaulement 204 permettant le montage du capuchon 126 et plus précisément d'une portion annulaire 194 solidaire du capuchon 126, cet élément annulaire ou bourrelet étant tel qu'il s'étend de l'épaulement 204 à la surface frontale 196 du piston de contrôle.

Dans ce deuxième mode de réalisation, un anneau élastique 200 est monté dans une gorge 206 formée sur le piston hydraulique 120 et pénètre dans une gorge placée en vis à vis formée dans le piston de contrôle 164 limitant ainsi les déplacements relatifs entre piston hydraulique 120 et piston de contrôle 164 et évitant un désengagement accidentel des languettes 178 et 180. Il est bien entendu que tout autre dispositif de limitation de mouvement peut être utilisé. Cet anneau élastique 200 permet également le démontage en bloc du piston hydraulique 120 et du piston de contrôle 164.

Le frein qui vient d'être décrit à l'aide de la figure 3 fonctionne de la façon suivante:

Au repos, les différents éléments du frein occupent les positions représentées. Lorsque le frein est actionné au moyen de la commande mécanique, le levier 134 et l'axe 136 sollicitent la biellette 140 dans une direction générale représentée par la flèche F1. La biellette 140 au travers de la rainure 150 pousse la portion épanouie 148 de la vis 146 à l'encontre du ressort 152. Comme la portion cylindrique de la vis peut coulisser par rapport à l'alésage 156 formé dans le moteur de frein la vis 146 se déplace également dans le sens de la flèche F1. Ce mouvement de la vis 146 au moyen de la portion filetée 158 est transmis à l'écrou 160, la rotation de celui-ci étant empêchée par l'embrayage unidirectionnel 192, l'écrou 160 vient en appui sur le piston hydraulique 120. L'effort de la biellette 140 est donc transmis à l'élément de friction 114 et par réaction de cet élément de friction 114 sur le disque 118 apparaît une contre réaction sur l'axe 136 qui entraîne en coulissement l'étrier 110 dans le sens contraire à celui défini par la flèche F1 ce qui amène l'élément de friction 116 en contact du disque 118. Au relâchement de la commande manuelle les différents éléments du frein reprennent les positions représentées.

Lorsque le frein est actionné au moyen de la commande hydraulique, une pression hydraulique est appliquée dans la chambre 130 de manière à solliciter le piston 120 vers la gauche en se référant à la figure 3. Si le mouvement du piston 120 par rapport à l'écrou 160 ne dépasse pas le jeu fonctionnel défini entre la butée à billes, la pièce annulaire 186 et la collerette 182, le mouvement du piston 120 n'a aucun effet sur le réglage automatique. Si le mouvement du piston 120 est supérieur au jeu prédéterminé l'écrou 160 est entraîné vers la gauche par le piston 120 au travers de la butée à billes de la pièce annulaire 186 solidaire du piston. La vis 146 étant immobilisée axialement au moyen du ressort 152, l'écrou 160 grâce au pas réversible tourne par rapport à la vis 146 pour pouvoir suivre le mouvement du piston 120, l'embrayage unidirectionnel 192 autorisant cette rotation. Dans cette phase de fonctionnement, l'élément annulaire 176 est libre de tourner avec l'écrou 160, le piston de contrôle 164 n'appliquant pas comme on le verra plus tard l'élément annulaire 176 sur la paroi 170. Si la pression hydraulique est alors relâchée, le joint 166 de façon conventionnelle fait légèrement revenir le piston 120, l'embrayage unidirectionnel 192 interdisant la rotation de l'écrou 160. Comme à

**0 175 600**

l'application du freinage l'écrou a tourné en se déplaçant vers la gauche, le dispositif de réglage automatique se trouve donc maintenant dans une nouvelle position décalée vers la gauche et interdit au piston de prendre sa position initiale.

Si, par contre, le relâchement du freinage n'intervient pas immédiatement, la pression dans la chambre 130 continue à monter et sous l'effet de cette pression et de l'effort engendré par le piston 120 l'étrier se déforme. Il est donc nécessaire de bloquer le fonctionnement du réglage avant le début de la déformation mécanique de l'étrier.

Lorsque la pression dans la chambre 130 atteint le niveau défini par la section du piston de contrôle 164, par la résistance au mouvement de ce piston engendré par le joint 124, et par l'effort de déformation de la portion annulaire 194 du capuchon 126, le piston de contrôle 164 se déplace sous l'effet de cette pression vers la gauche et pince au moyen de sa collerette 172 l'élément annulaire 176 contre la paroi 170 du piston 120. L'élément annulaire 176 étant alors immobilisé en rotation par le piston de contrôle 164, toute rotation de l'écrou 160 devient impossible du fait des languettes 178 et 180. L'écrou 160 étant dans l'impossibilité de tourner entraîne la vis 146 au travers du filetage à pas réversible et comprime le ressort 152. Le piston 120 et le piston 164 se déplacent vers la gauche sous l'effet de la pression régnant dans la chambre 130 engendrant des déformations dans l'étrier du fait des efforts mis en jeu sans mettre en oeuvre le réglage automatique, l'effort de pincement engendré par le piston de contrôle et plus précisément par sa collerette 172 sur l'élément annulaire 176 étant supérieur à l'effort du ressort 152. Au relâchement de la pression hydraulique, dans un premier temps, le ressort 152 se détend et amène la vis 146 dans sa position initiale, l'écrou 160 n'est alors plus soumis à un effort axial transmis par la vis 146 mais reste sans jeu fonctionnel. Dans un deuxième temps, le joint 166 ramène le piston 120 vers la droite de la figure 3 d'une façon conventionnelle et le jeu fonctionnel apparaît maintenant entre l'écrou 160 et la butée à billes. Dans un troisième temps, la pression continuant à décroître, le joint 124 de même que le joint 166 précédemment repousse le piston de contrôle vers la droite aidé en celà par la portion annulaire 194 du capuchon de protection 126 libérant ainsi l'élément annulaire 176 qui est de nouveau libre de tourner avec l'écrou 160 si celui-ci est sollicité en rotation.

Comme on le voit de la description de ce deuxième mode de réalisation, le dispositif objet de l'invention permet de contrôler le blocage du réglage automatique à partir d'une pression prédéterminée définie par la section du piston de contrôle 164 et la raideur de la portion annulaire du capuchon de protection 126. On notera que lorsque la pression prédéterminée est atteinte, le piston de contrôle 164 est en appui axial sur le piston 120 au moyen de sa collerette 172 au travers de l'élément annulaire 176, l'effort engendré par la pression régnant dans la chambre 130 sur les éléments de friction est donc le même que si le piston 120 s'étendait jusqu'à l'alésage 122 du corps du moteur de frein. Cette solution permet d'implanter le dispositif objet de l'invention dans un frein existant sans en changer les caractéristiques de fonctionnement et celà sans aucune intervention ni sur les usinages de l'étrier ni sur la vis du réglage automatique.

Il est est de même pour le premier mode de réalisation décrit ci-dessus.

On voit également que le piston hydraulique, le piston de contrôle, l'élément annulaire et l'écrou forment un ensemble démontable en bloc du moteur de frein et de la vis.

Il est bien évident que le mode d'actionnement de la commande mécanique peut être remplacé par toute autre commande engendrant un effort axial sur la vis dans le sens de la flèche A de la figure 1, de même l'embrayage unidirectionnel 92 peut être réalisé autrement que par un ressort d'embrayage et que des dispositifs antirotation des pistons 20 et 64 peuvent être rajoutés sans sortir du cadre de la présente invention.

**Revendications**

1. Frein à disque à réglage automatique du type comportant un étrier (10, 110), un moteur de frein (12, 112) agissant directement sur un premier élément de fricion (14, 114) et par réaction au travers de l'étrier (10, 110) sur une deuxième élément de friction (16, 116), ledit moteur de frein (12, 112) comportant une commande mécanique (32, 132) agissant sur un piston de commande hydraulique (20, 120) au travers d'un dispositif de réglage automatique, ledit dispositif de réglage étant formé par un dispositif à vis écrou (46-60, 146-160) à pas réversibles susceptible d'être actionné par le piston hydraulique (20, 120) au-delà d'une course prédéterminée de celui-ci, ledit dispositif de réglage comportant un élément annulaire (76, 176) solidaire en rotation dudit écrou (60, 160) et coopérant avec un piston de contrôle (64, 164) immobilisant ledit élément annulaire (76, 176) en rotation lorsque la pression hydraulique agissant sur ledit piston hydraulique (20, 120) atteint une valeur prédéterminée, caractérisé en ce que ledit piston hydraulique (20, 120) et ledit piston de contrôle (64, 164) sont montés coaxialement l'un dans l'autre et coopèrent à coulissement réciproque étanche (62-66, 162-166).

2. Frein à disque selon la revendication 1 caractérisé en ce que le piston de contrôle (64, 164) est susceptible d'immobiliser angulairement ledit élément annulaire (76, 176) par pincement contre une paroi (70, 170) du piston de commande hydraulique (20, 120) lorsque ladite pression prédéterminée est atteinte.

3. Frein à disque selon la revendication 2, caractérisé en ce qu'un élément élastique (66, 94, 124-194) placé entre le piston de contrôle (64, 164) et le piston hydraulique (20, 120) sollicite axialement ledit piston de contrôle (64, 164) en éloignement de ladite paroi (70, 170) du piston de commande (20, 120).

4. Frein à disque selon l'une des revendications précédentes, caractérisé en ce que ledit piston de contrôle (64) est reçu à coulissement étanche dans un alésage (62) formé dans ledit piston de commande hydraulique (20).

5. Frein à disque selon les revendications 3 et 4 prises en combinaison, caractérisé en ce que ledit élément élastique (66) est un joint d'étanchéité placé entre le piston de contrôle (64) et ledit alésage (62).

6. Frein à disque selon l'une des revendications 1 à 3, caractérisé en ce que le piston hydraulique (120) est reçu à coulissement étanche dans un alésage (162) formé dans ledit piston de contrôle (164) ce dernier étant reçu à coulissement étanche dans un alésage (122) formé dans le moteur de frein (112).

7. Frein à disque selon la revendication 6, caractérisé en ce que le piston de contrôle (64) est un piston annulaire comportant à une extrémité une collerette (172) susceptible d'appliquer ledit élément annulaire (176) contre une face frontale (170) dudit piston de commande (120).

8. Frein à disque selon la revendication 7, caractérisé en ce que le piston de contrôle (164) comporte à son autre extrémité une surface frontale (196) susceptible de solliciter ledit élément élastique (194) placé entre ladite surface frontale (196) et une autre surface frontale (198) formée sur le piston de commande (120).

9. Frein à disque selon la revendication 8, caractérisé en ce que ledit élément élastique (194) est une portion annulaire solidaire d'un capuchon (126) de protection du moteur de frein (112).

10. Frein à disque selon l'une des revendications précédentes, caractérisé en ce que le piston de commande hydraulique (20, 120), le piston de contrôle (64, 164), l'élément annulaire (76, 176) et l'écrou (60, 160) forment un ensemble démontable en bloc.

**Patentansprüche**

1. Selbsttätig nachstellbare Scheibenbremse mit einem Bremssattel (10, 110), einem Bremsmotor (12, 112), der unmittelbar auf ein erstes Reibglied (14, 114) und durch Reaktion über den Bremssattel (10, 110) auf ein zweites Reibglied (18, 118) einwirkt, wobei der Bremsmotor (12, 112) eine mechanische Betätigung (32, 132) aufweist, die über eine selbstätige Nachstellvorrichtung auf einen hydraulischen Betätigungskolben (20, 120) einwirkt, wobei die Nachstellvorrichtung von einem Einweg-Spindelmechanismus (46-60, 146-160) gebildet wird, der durch den hydraulischen Kolben (20, 120) jenseits eines vorgegebenen Weges desselben betätigbar ist, wobei die Nachstellvorrichtung ein ringförmiges Teil (76, 176) aufweist, das mit der Mutter (60, 160) des Spindelmechanismus drehfest verbunden ist und mit einem Steuerkolben (46, 146) zusammenwirkt, um das ringförmige Teil (76, 176) drehfest zu halten, wenn der hydraulische Druck, der auf den hydraulischen Kolben (20, 120) einwirkt, einen vorgegebenen Wert erreicht, dadurch gekennzeichnet, daß der hydraulische Kolben (20, 120) und der Steuerkolben (64, 164) koaxial ineinander gelagert sind und abgedichtet hin- und hergleitend (62-66, 162-166) zusammenwirken.

2. Scheibenbremse nach Anspruch 1, dadurch gekennzeichnet, daß der Steuerkolben (64, 164) in der Lage ist, das ringförmige Teil (76, 176) durch Festklemmen an einer Wand (70, 170) des hydraulischen Betätigungskolbens (20, 120) in Umfangsrichtung festzulegen, wenn der vorgegebene Druck erreicht ist.

3. Scheibenbremse nach Anspruch 2, dadurch gekennzeichnet, daß ein zwischen dem Steuerkolben (64, 164) und dem hydraulischen Kolben (20, 120) angeordnetes elastisches Teil (66, 94, 124-194) den Steuerkolben (64, 164) von der besagten Wand (70, 170) des Betätigungskolbens (20, 120) wegdrückt.

4. Scheibenbremse nach einem der vorhergehenden Ansprüche, dadurch gekennzeichnet, daß der Steuerkolben (64) abgedichtet gleitend in einer Bohrung (62) untergebracht ist, welche in dem hydraulischen Betätigungskolben (20) gebildet ist.

5. Scheibenbremse nach Anspruch 3 und 4, dadurch gekennzeichnet, daß das elastische Teil (66) eine Dichtung ist, die zwischen dem Steuerkolben (64) und der Bohrung (62) angeordnet ist.

6. Scheibenbremse nach einem der Ansprüche 1 bis 3, dadurch gekennzeichnet, daß der hydraulische Kolben (120) abgedichtet gleitend in einer Bohrung (162) des Steuerkolbens (164) untergebracht ist, wobei der letztere abgedichtet gleitend in einer Bohrung (122) des Bremsmotors (112) untergebracht ist.

7. Scheibenbremse nach Anspruch 6, dadurch gekennzeichnet, daß der Steuerkolben (64) ein Ringkolben ist, der an einem Ende einen Kragen (172) aufweist, der das ringförmige Teil (176) gegen eine vordere Stirnfläche (170) des Betätigungskolbens (120) andrücken kann.

8. Scheibenbremse nach Anspruch 7, dadurch gekennzeichnet, daß der Steuerkolben (164) an seinem anderen Ende eine Stirnfläche (196) aufweist, die in der Lage ist, das elastische Teil (164) vorzuspannen, welches zwischen der besagten vorderen Fläche (196) und einer anderen vorderen Fläche (198) des Betätigungskolbens (120) angeordnet ist.

9. Scheibenbremse nach Anspruch 8, dadurch gekennzeichnet, daß das elastische Teil (194) ein ringförmiger Abschnitt einer Schutzmanschette (126) des Bremsmotors (112) ist.

10. Scheibenbremse nach einem der vorhergehenden Ansprüche, dadurch gekennzeichnet, daß der hydraulische Betätigungskolben (20, 120), der Steuerkolben (64, 164), das ringförmige Teil (76, 176) und die Mutter (60, 160) eine als Block abnehmbare Baueinheit bilden.

**Claims**

1. Disk brake with automatic adjustment of the type incorporating a calliper (10, 110), a brake actuator (12, 112) acting directly upon a first friction component (14, 114) and, by reaction through the calliper (10, 110), upon a second friction component (16, 116), the said brake actuator (12, 112) incorporating a mechanical control (32, 132) acting upon a hydraulic control piston (20, 120) through an automatic adjustment device, the said adjustment device consisting of a screw and nut device (46-60, 146-160) with reversible pitches (sic) capable of being operated by the hydraulic piston (20, 120) beyond a predetermined travel of the latter, the said adjustment device incorporating an annular component (76, 176) firmly fixed in rotation to the said nut (60, 160) and co-operating with a control piston (64, 164) immobilizing the said annular component (76, 176) in rotation when the hydraulic pressure acting upon the said hydraulic piston (20, 120) reaches a predetermined value, characterized in that the said hydraulic piston (20, 120) and the said control piston (64, 164) are mounted coaxially one inside the other and cooperate in sealed reversible sliding (62-66, 162-166).

2. Disk brake according to Claim 1, characterized in that the control piston (64, 164) is capable of immobilizing angularly the said annular component (76, 176) by trapping the hydraulic control piston (20, 120) against a wall (70, 170) when the said predetermined pressure is reached.

3. Disk brake according to Claim 2, characterized in that an elastic component (66, 94, 124-194) positioned between the control piston (64, 164) and the hydraulic piston (20, 120) pushes the said control piston (64, 164) axially away from the said wall (70, 170) of the control piston (20, 120).

4. Disk brake according to one of the preceding claims, characterized in that the said control piston (64) is housed so as to slide and to be sealed in a bore (62) formed in the said hydraulic control piston (20).

5. Disk brake according to Claims 3 and 4 taken together, characterized in that the said elastic component (66) is a seal positioned between the control piston (64) and the said bore (62).

6. Disk brake according to one of Claims 1 to 3, characterized in that the hydraulic piston (120) is housed so as to slide and to be sealed in a bore (122) formed in the said control piston (164), the latter being housed so as to slide and to be sealed in a bore (122) formed in the brake actuator (112).

7. Disk brake according to Claim 6, characterized in that the control piston (64) is an annular piston incorporating at one end a collar (172) which is capable of applying the said annular component (176) to a frontal surface (170) of the said control piston (120).

8. Disk brake according to Claim 7, characterized in that the control piston (164) carries at its other end a frontal surface (196) which is capable of pushing the said elastic component (194) positioned between the said frontal surface (196) and another frontal surface (198) formed on the control piston (120).

9. Disk brake according to Claim 8, characterized in that the said elastic component (194) is an annular portion firmly fixed to a protective cap (126) of the brake actuator (112).

10. Disk brake according to one of the preceding claims, characterized in that the hydraulic control piston (20, 120), the control piston (64, 164), the annular component (76, 176) and the nut (60, 160) form an assembly which may be removed as a unit.

FIG-1

FIG-2

FIG.3

0 175 600